# EUROPÄISCHE PATENTANMELDUNG

(11) **EP 1 734 087 A1**
(43) Veröffentlichungstag der Anmeldung: **20.12.2006**
(21) Anmeldenummer: 05105396.5
(22) Anmeldetag: 17.06.2005
(51) Int. Cl.: C09D 4/00, C09J 4/00, C08K 5/07, C09J 11/06

(54) **(Meth)Acrylat-Zusammensetzung mit reduzierter Sauerstoffinhibierung**

(71) Anmelder: Sika Technology AG, 6340 Baar (CH)
(72) Erfinder: Kramer, Andreas, 8006, Zürich (CH); Maier, Steffen, 79106, Freiburg (DE)
(74) Vertreter: Isler, Jörg

(57) **Zusammenfassung**

Die vorliegende Erfindung betrifft zwei- oder mehrkomponentige Zusammensetzungen, welche mindestens die folgenden Inhaltsstoffe umfassen
a) mindestens ein (Meth)acrylat;
b) mindestens eine Verbindung der Formel (I);
c) mindestens ein Metallsalz oder eine Metallkomplexverbindung mindestens eines Metalls ausgewählt aus der Gruppe der Übergangsmetalle;
d) mindestens ein Peroxid oder mindestens ein Perester oder mindestens ein Hydroperoxid;
wobei eine erste Komponente **K1** mindestens den Inhaltsstoff c) umfasst und eine zweite Komponente **K2** mindestens den Inhaltsstoff d) umfasst.

Diese Zusammensetzungen zeichnen sich dadurch aus, dass bei deren Aushärtung die Sauerstoffinhibierung verhindert oder stark reduziert wird. Die Zusammensetzungen eigen sich insbesondere als Klebstoffe, Dichtstoffe und Beschichtungen.

## Beschreibung

### Technisches Gebiet

Die vorliegende Erfindung betrifft das Gebiet der radikalisch härtenden (Meth)acrylat-Zusammensetzungen.

### Stand der Technik

Radikalisch aushärtende (Meth)acrylat-Zusammensetzungen sind seit langem bekannt. Sie werden als Klebstoffe, Dichtstoffe und Beschichtungen verwendet. Ein wesentlicher Vorteil ist die schnelle Aushärtung dieser Systeme. Nachteilig und bekannt ist jedoch, dass die Aushärtung von (Meth)acrylat durch den in der Luft befindlichen Sauerstoff inhibiert werden kann. Dies führt dazu, dass die Polymerisation der (Meth)acrylate stark eingeschränkt wird, wo die Monomere in Kontakt mit Luft sind, und dass sich so klebrige Oberflächen bilden. Eine derartige Klebrigkeit ist jedoch ein grosser Nachteil, da einerseits dort Staub haften bleiben kann und so zu sichtbaren Verschmutzungen führt und andererseits führen die nicht oder schwach vernetzten Monomeren zu einer schmierigen und klebrigen Oberfläche, welche unangenehm zum Anfassen ist. Weiterhin bedingt die Inhibierung eine Geruchsimmission und Kontaminierung durch nicht reagierte Monomere. Diese Effekte sind insbesondere dort sehr nachteilig, wo grosse Flächen in Kontakt mit Luft stehen, insbesondere bei Beschichtungen. Es sind deshalb seit langem Anstrengungen unternommen worden, um die Sauerstoffinhibierung reduzieren oder gar verhindern zu können. Ein Ansatzpunkt hierfür ist die Verwendung von Paraffinen, welche sich in den Monomeren lösen und bei der Aushärtung inkompatibel werden, sich dann an der Oberfläche ansammeln und so die Luft abschirmen. Diese Variante zur Lösung der Sauerstoffinhibierung ist jedoch aus zweierlei Gründen sehr nachteilig. Einerseits ist die Balance zwischen Löslichkeit und Inkompatibilität sehr delikat und sehr stark abhängig vom jeweiligen Monomer, so dass nur gewisse ausgewählte (Meth)acrylate in den jeweiligen Formulierungen verwendet werden können. Andererseits ist die Überschichtbarkeit derartiger (Meth)acrylatsysteme durch die Anwesenheit von Paraffin an der Oberfläche ohne dessen Entfernung schwierig, so dass Haftprobleme für die Anbindung von Folgeschichten auftreten. Ein weiterer Ansatzpunkt zur Lösung der Sauerstoffproblematik ist das Überschichten der Oberfläche mit einem Inertgas oder das Arbeiten unter Inertgas. Derartige Inertgase sind beispielsweise Stickstoff, Argon oder CO₂. Diese Methode ist jedoch sehr aufwändig und kostenintensiv und eignet sich typischerweise nur für kleine Oberflächen. Dies gilt ebenfalls für eine weitere Lösung, nämlich für das Arbeiten unter reduziertem Druck. Eine weitere Möglichkeit zur Reduktion der Sauerstoffinhibierung bietet sich bei der Verwendung von leichtflüchtigen Verbindungen oder Monomeren, die während der Polymerisation verdampfen und so die Luft von der Oberfläche verdrängen. Diese Möglichkeit ist beispielsweise bei der Polymerisation von Methacrylsäuremethylester und Acrylsäuremethylester realisiert. Diese Monomere haben eine hohe Flüchtigkeit und deshalb wird bei Formulierungen, die auf diesen Monomeren basieren, nur eine geringe Sauerstoffinhibierung beobachtet. Nachteilig bei dieser Lösung ist jedoch, dass sich durch die hohen Mengen an verflüchtigenden Verbindungen Probleme mit dem Geruch und/oder mit der Toxizität und/oder Arbeitssicherheit ergeben. Eine weitere Methode ist das Arbeiten bei erhöhter Temperatur oder das Tempern nach der Polymerisation bei höheren Temperaturen. Hierdurch wird die Klebrigkeit ebenfalls reduziert. Nachteilig hierbei ist jedoch, dass das Heizen einerseits kosten- und arbeitsintensiv ist und andererseits nur für kleinere Flächen oder Werkstücke praktisch durchführbar ist. Schliesslich kann die klebrige Schicht, die sich durch die Sauerstoffinhibierung bildet, auch entfernt werden. Dies kann mechanisch oder durch ein Abwischen mit einem geeigneten Lösungsmittel erfolgen. Die Entfernung ist jedoch einerseits ein zusätzlicher Arbeitsschritt und kann andererseits die polymerisierte Oberfläche schädigen.

Der Einsatz von β-Dicarbonylverbindungen in lufttrocknenden Systemen ist bekannt. Derartige lufttrocknende Systeme weisen höher molekularere Polymere auf und weisen insbesondere keine Peroxide oder Hydroperoxide auf, sondern reagieren über Sauerstoff durch oxidative Vernetzung von Doppelbindungen, und sind insbesondere mit (Meth)acrylaten verglichen sehr langsam. DE-A-26 01 378 offenbart beispielsweise die Verwendung von Derivaten von γ-Butyrolacton und δ-Valerolacton in lufttrocknenden Polyesterharzen. Diese lufttrocknenden Polyesterharze sind styrolbasierende Polykondensationsprodukte von ungesättigten Dicarbonsäuren und Polyolen. DE-A-30 44 695 beschreibt ein luftvernetzendes Überzugsmittel, bei welchem β-Dicarbonylverbindung zu einem Copolymerisat zugegeben werden.

### Darstellung der Erfindung

Aufgabe der vorliegenden Erfindung ist es daher, die Nachteile des Standes der Technik zu überwinden, und insbesondere eine Möglichkeit zu finden, um bei (Meth)acrylaten eine schnelle Aushärtung zu erreichen, bei welcher die durch den Sauerstoff bedingte Inhibierung verhindert oder zumindest stark reduziert wird. Insbesondere soll dies auch für nicht oder nur schwach riechende (Meth)acrylate möglich sein.

Überraschenderweise wird diese Aufgabe durch eine zwei- oder mehr komponentige Zusammensetzung gemäss Anspruch 1 erreicht.

Die Zusammensetzung ermöglicht eine schnelle Aushärtung in Gegenwart von Sauerstoff, wobei die Sauerstoffinhibierung gänzlich oder zumindest stark reduziert wird, insbesondere im Vergleich zur analogen (Meth)acrylat-Zusammensetzung ohne die Verbindung der Formel (I) und ohne das Metallsalz oder die Metallkomplexverbindung des Anspruchs 1.

Die Zusammensetzung weist ausserdem exzellente mechanische Eigenschaften auf, die breit variierbar sind und mit denen sowohl dünn- als auch dickschichtige Beschichtungen aber auch Dicht- und Klebstoffe realisiert werden können.

Insbesondere lassen sich hiermit auch Formulierungen realisieren, welche frei von Verbindungen sind, welche bekannterweise einen starken und störenden Geruch aufweisen, wie (Meth)acrylsäuremethylester oder Styrol.

### Wege zur Ausführung der Erfindung

Die vorliegende Erfindung betrifft zwei- oder mehrkomponentige Zusammensetzungen, welche mindestens die folgenden Inhaltsstoffe umfassen
a) mindestens ein (Meth)acrylat;
b) mindestens eine Verbindung der Formel (I);
c) mindestens ein Metallsalz oder ein Metallkomplexverbindung mindestens eines Metalls ausgewählt aus der Gruppe der Übergangsmetalle;
d) mindestens ein Peroxid oder mindestens ein Perester oder mindestens ein Hydroperoxid;
wobei eine erste Komponente **K1** mindestens den Inhaltsstoff c) umfasst und eine zweite Komponente **K2** mindestens den Inhaltsstoff d) umfasst.

Der Begriff "Komponente" oder "komponentig" wird nicht im Sinne von "Inhaltsstoff" verwendet, sondern es wird hiermit gemeint, dass eine Substanz oder eine Substanzmischung getrennt von einer anderen Substanz oder Substanzmischung gelagert wird. Unter dem Begriff "(Meth)acrylat" werden im gesamten vorliegenden Dokument Ester der Acrylsäure (= "Acrylat") oder der Methacrylsäure (= "Methacrylat") verstanden, die somit mindestens eine CH₂=CH-CO-O- oder mindestens eine CH₂=C(CH₃)-CO-O-Gruppe aufweisen.

Die Vorsilbe "Metall" wird im gesamten vorliegenden Dokument nicht im Sinne von "metallisch" verstanden, sondern es steht für ein Metallkation in einem Salz oder für ein in einer Komplexverbindung an Liganden gebundenes Metallkation.

Unter "Übergangsmetalle" werden im gesamten vorliegenden Dokument sowohl die Metalle der Ordnungszahl 21-30, 39-48, 57-80 sowie 89 bis 109 des Periodensystems verstanden, das heisst der Term umfasst auch die sogenannten Lanthaniden als auch die Actiniden.

Die zwei- oder mehrkomponentige Zusammensetzungen umfasst mindestens die zwei Komponenten **K1** und **K2.**

Die erste Komponente **K1** umfasst mindestens den Inhaltsstoff c). Das heisst, die Komponente **K1** besteht aus oder umfasst mindestens ein Metallsalz oder eine Metallkomplexverbindung mindestens eines Metalls ausgewählt aus der Gruppe der Übergangsmetalle.

Vorzugsweise ist das Metall des mindestens einen Metallsalzes oder der Metallkomplexverbindung ein Metall, welches ausgewählt ist aus der Gruppe umfassend Cobalt, Mangan, Vanadium, Eisen, Kupfer, Chrom und Zirkonium.

Die zweite Komponente **K2** umfasst mindestens den Inhaltsstoff d). Das heisst, Komponente **K2** besteht aus oder umfasst mindestens ein Peroxid oder mindestens ein Perester oder mindestens ein Hydroperoxid.

Die zwei- oder mehrkomponentige Zusammensetzung enthält den Inhaltsstoff a), nämlich mindestens ein (Meth)acrylat.

Es eignen sich grundsätzlich alle im Kleb- und Dichtstoff- und Beschichtungsbereich eingesetzten Monomere und Oligomere. Besonders eignen sich jedoch vor allem diejenigen Monomere und Oligomere, welche keinen oder nur geringen Geruch aufweisen. Insbesondere ist deshalb beispielsweise Methyl(meth)acrylat nicht als Monomer bevorzugt.

Es hat sich gezeigt, dass insbesondere diejenigen (Meth)acrylate geeignet sind, die im Esterteil ein Heteroatom, insbesondere ein Sauerstoffatom, aufweisen, welches durch mindestens 1 aber durch weniger als 5, insbesondere durch 2 oder 3, Kohlenstoffatome von dem in der Formel (VI) mit Stern bezeichneten markierten Sauerstoffatom entfernt ist

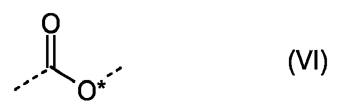

Beispiele für derartige (Meth)acrylate sind Hydroxymethyl(meth)acrylat, Hydroxyethyl(meth)acrylat (HEA, HEMA), Hydroxypropyl(meth)acrylat (HPA, HPMA), Hydroxybutyl(meth)acrylat (HBA, HBMA), insbesondere Hydroxyethyl-(meth)acrylat (HEA, HEMA), Hydroxypropyl(meth)acrylat (HPA, HPMA).

Weitere Beispiele sind für derartige (Meth)acrylate sind 2(2-Ethoxy-ethoxy)ethyl(meth)acrylat, 2-Phenoxyethyl(meth)acrylat, Caprolacton(meth)-acrylat ( OH-(CH₂)₅COO-(CH₂)₅COOCH₂CH₂CH=CH₂ ), Methoxypolyethylenglycolmono(meth)acrylat, Polypropylenglycolmono(meth)acrylat, Polyethylenglycolmono(meth)acrylat, Tetrahydrofurfuryl(meth)acrylat, Furfuryl(meth)-acrylat,1,3-Butylenglycoldi(meth)acrylat, 1,4-Butandioldi(meth)acrylat, Diethylenglycoldi(meth)acrylat, Dipropylenglycoldi(meth)acrylat, Ethoxyliertes Bisphenol-A-di(meth)acrylat, Trimethylolpropantri(meth)acrylat, Ethylenglycolmonoacetoacetatmono(meth)acrylat, Dimethylamino-(2-)-ethyl-(meth)acrylat.

Methacrylate sind gegenüber Acrylaten bevorzugt.

Als besonders bevorzugt gelten Tetrahydrofurfuryl(meth)acrylat, Ethylenglycolmonoacetoacetatmono(meth)acrylat, Hydroxyethyl(meth)acrylat und Hydroxypropyl(meth)acrylat.

Die zwei- oder mehrkomponentige Zusammensetzung enthält den Inhaltsstoff b), nämlich mindestens eine Verbindung der Formel (I).

Verbindungen der Formel(I) sind

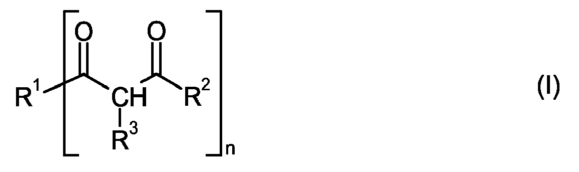

Der Index n steht hierbei für einen Wert von 1 bis 20. Bevorzugt stellt n einen Wert von 1, 2, 3, 4, 5 oder 6 dar. Bevorzugt steht n für 1. Der Substituent R¹ steht für einen n-wertigen organischen Rest.

Als "n-wertiger organischer Rest" wird hier und im Folgenden ein organischer Rest bezeichnet, zu welchem n Bindungen erfolgen. So sind beispielsweise Alkyl, Aryl, Aralkyl, Cycloalkyl, Oxyalklyl, Oxyaryl einwertige Reste, Methylen oder Phenylen zweiwertige Reste, während beispielsweise 1,2,3-Butantriyl 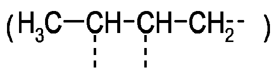 ein dreiwertiger Rest ist.

Der Substituent R² steht für eine, gegebenenfalls substituierte, Alkylgruppe, Cycloalkylgruppe, Arylgruppe, Aralkylgruppe oder R² schliesst zusammen mit R³ einen Ring, welcher gegebenenfalls Heteroatome im oder am Ring umfasst, oder R² steht für einen Rest OR⁴. Hierbei steht R⁴ für eine, gegebenenfalls substituierte, Alkylgruppe, Cycloalkylgruppe, Arylgruppe oder Aralkylgruppe, oder R⁴ schliesst zusammen mit R³ einen Ring, welcher gegebenenfalls Heteroatome im oder am Ring aufweist.

Der Substituent R³ steht für eine, gegebenenfalls substituierte, Alkylgruppe, Cycloalkylgruppe, Arylgruppe, Aralkylgruppe oder schliesst zusammen mit R² einen Ring, welcher gegebenenfalls Heteroatome im oder am Ring umfasst.

Somit können die Substituenten R² und R³ unabhängig voneinander jeweils für eine Alkylgruppe, Cycloalkylgruppe, Arylgruppe oder Aralkylgruppe stehen, welche allenfalls substituiert sein kann. Oder die Substituenten R² und R³ schliesst zusammen einen Ring. Dieser gebildete Ring wird typischerweise durch miteinander verbundene Kohlenstoffe gebildet. Es können aber in diesem Ring auch Heteroatome vorhanden sein, oder es können auch Heteroatome mit den Atomen, welche den Ring bilden, verbunden sein.

Es ist besonders bevorzugt, wenn die Reste R² und R³ miteinander verbunden sind und einen Ring schliessen.

Als n-wertiger organischer Rest für R¹ sind einerseits zweiwertige Reste wie Alkylen-, Phenylen-, Cycloalkylen-, Oxyalkylene und Poly(oxyalkylen)-Gruppen geeignet. Bevorzugt sind Ethylen, Propylen, Cyclohexylen. Anderseits sind dreiwertige bis typischerweise sechswertige Reste möglich, die sich zum Beispiel von Cylcoaliphaten oder Benzolderivaten ableiten.

Besonders bevorzugte n-wertige Reste sind Heteroatome aufweisende n-wertige organische Reste R¹.

Als n-wertige Reste R¹ eignen sich insbesondere solche welche sich von Polyolen der Fromel R^{1'}(OH)ₙ ableiten. In diesen Resten ist R¹ ein Rest R^{1'}(O)ₙ, d.h. eines Alkohol R^{1'}(OH)ₙ mit n Hydroxyl-Gruppen, nach der Entfernung aller Protonen aller Hydroxylgruppen.

Als Beispiel für 1-wertige Reste sind Alkylgruppen, wie Ethyl- oder Methylgruppen, zu hervorzuheben.

Bevorzugte Bespiele für derartige zweiwertige Alkohole Polyetherdiole, Polyesterdiole, Polycarbonatdiole sowie hydrierte Polybutadiene. Insbesondere bevorzugt sind Diole der Formel (II)

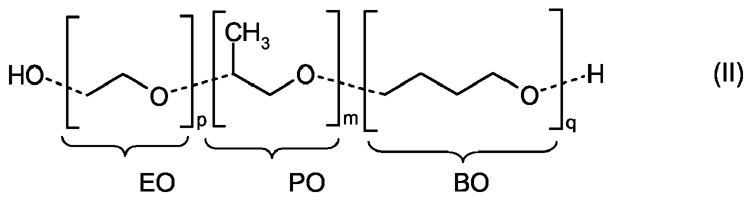

Wobei die Indizes p, m und q für die Werte p = 0 - 65, m = 0 - 65, q = 0 - 65 stehen und die Summe von m, p und q einen Wert von 1 bis 65 ergibt. Die Bausteine, welche sich bei der Herstellung dieser Polyole aus Ethylenoxid, Propylenoxid und Butylenoxid ergeben und deshalb in Formel (II) als "EO", "PO" und "BO" bezeichnete werden, können, falls es sich um Copolymere handelt, zufällig oder blockartig angeordnet sein. Dies wird durch die Verwendung von gestrichelten Bindungen in Formel (II) angedeutet. Die Anordnung lässt sich durch die hierfür bekannten Verfahren erzielen.

Als dreiwertige Reste R¹ kommen insbesondere die von Triolen abgeleiteten Reste in Frage. Derartige Triole sind Glycerin (1-, 2-, 3- Propantriol), Trimethylolpropan, Trimethylolethan, sowie deren alkoxylierten Derivate.

Als vierwertige Reste R¹ kommen insbesondere die von Tetrolen abgeleiteten Reste in Frage. Derartige Tetrole sind Pentaerythrit, α, α'-Diglycerin (Bis-(2,3-dihydroxypropyl)ether), Di-(trimethylolpropan) (2,2'-Oxybis-(methylen)-bis-(2-ethyl-1,3-propandiol)) und Di-(trimethylolethan) (3-(3-Hydroxy-2-hydroxymethyl-2-methyl-propoxy)-2-hydroxymethyl-2-methyl-propan-1-ol), sowie deren alkoxylierten Derivate.

Als sechswertige Reste R¹ kommen insbesondere die von Hexolen abgeleiteten Reste in Frage. Beispiele für derartige Hexole sind Di-(Pentaerythrit)(3-(3-Hydroxy-2,2-bis-hydroxymethyl-propoxy)-2,2-bis-hydroxymethyl-propan-1-ol) sowie deren alkoxylierten Derivate.

Weitere bevorzugte Reste R¹ leiten sich von Zuckern oder Zuckeralkoholen ab. Derartige Zucker sind Monosaccharide oder Disaccharide oder Trisaccharide. Als Zuckeralkohole gelten insbesondere Tetrite, Pentite und Hexite. Diese Zucker und Zuckeralkohole können chemisch modifiziert sein, wie beispielsweise alkoxyliert.

Bevorzugt ist ein derartiger Alkohol R^{1'}(OH)ₙ Trimethylolpropan, Pentaerythrit, Glycerin, ein Zucker oder ein Diol der Formel (II).

Derartige von einem n-wertigen Alkohol R^{1'}(OH)ₙ abgeleiteten Verbindungen der Formel (I) lassen sich beispielsweise durch eine Umesterung des entsprechenden Methylesters erhalten:

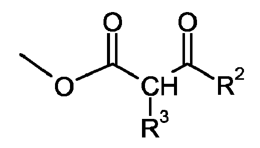

Als besonders bevorzugter Methylester gilt der folgende Methylester: 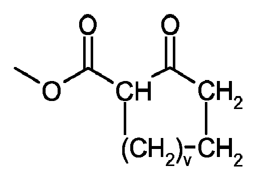 mit = 1, 2 oder 3.

Umesterungen können durch bekannte Verfahren durchgeführt werden, wie sie beispielsweise in Jerry March, "Advanced Organic Chemistry", 3rd Edition, John Wiley & Sons, 1985, S. 351-353 beschrieben sind.

In einer weiteren Ausführungsform ist der n-wertigen Alkohol R^{1'}(OH)ₙ ein OH-terminiertes Polyurethanprepolymer. Derartige OH-terminierte Polyurethanprepolymere werden auf die dem Fachmann bekannte Art und Weise erhalten, nämlich beispielsweise durch die Umsetzung von mindestens einem Polyol mit mindestens einem Polyisocyanat, wobei das Polyol in einem stöchiometrischen Überschuss der Hydroxyl-Gruppen gegenüber den Isocyanat-Gruppen eingesetzt wird.

In einer weiteren Ausführungsform ist der Index n=1 und R¹ steht für eine, gegebenenfalls substituierte, Alkylgruppe, Cycloalkylgruppe, Arylgruppe, Aralkylgruppe oder für einen Rest OR⁵. Hierbei steht R⁵ seinerseits für eine, gegebenenfalls substituierte, Alkylgruppe, Cycloalkylgruppe, Arylgruppe oder Aralkylgruppe oder eine Gruppe der Formel (III),

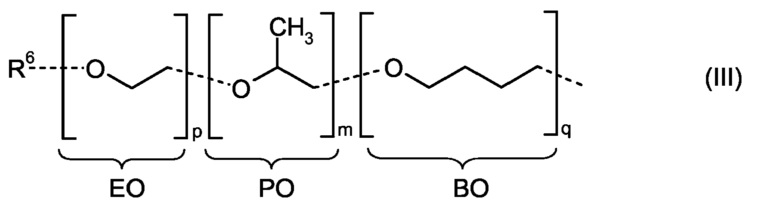

R⁶ steht für eine C₁- bis C₄-Alkylgruppe steht und die Indizes p, m und q stehen für die Werte p = 0 - 65, m = 0 - 65, q = 0 - 65. Die Summe von m, p und q ergibt einen Wert von 1 bis 65. Die Bausteine, welche sich bei der Herstellung dieser Polyolen aus Ethylenoxid, Propylenoxid und Butylenoxid ergeben und deshalb in Formel (III) als "EO", "PO" und "BO" bezeichnete werden, können, falls es sich um Copolymere handelt, zufällig oder blockartig angeordnet sein. Dies wird durch die Verwendung von gestrichelten Bindungen in Formel (II) angedeutet. Die Anordnung lässt sich durch die hierfür bekannten Verfahren erzielen.

In einer bevorzugten Ausführungsform ist die Verbindung der Formel (I) eine Verbindung der Formel (IV) oder (V) 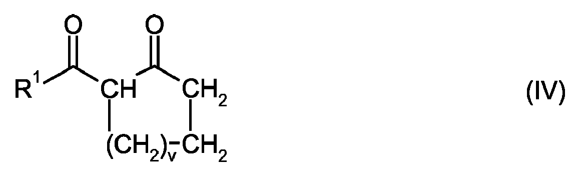 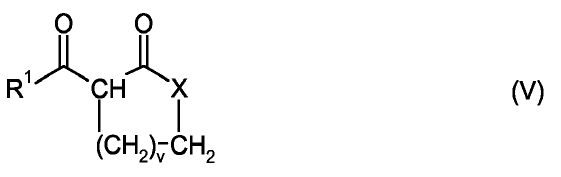 wobei v = 1, 2 oder 3 ist und X für O, S oder ein NR⁷ steht, wobei R⁷ für H oder für eine, gegebenenfalls substituierte, Alkylgruppe, Cycloalkylgruppe, Arylgruppe, Aralkylgruppe steht.

Bevorzugt steht v für die Werte 1 oder 2.

Bevorzugt bedeutet X ein Sauerstoffatom.

In einer bevorzugten Ausführungsform ist die Verbindung der Formel (I) eine Verbindung der Formel (IV) und R¹ steht für einen Rest OR⁵ mit R⁵ für eine für eine, gegebenenfalls substituierte, Alkylgruppe, Cycloalkylgruppe, Arylgruppe oder Aralkylgruppe oder eine Gruppe der Formel (III).

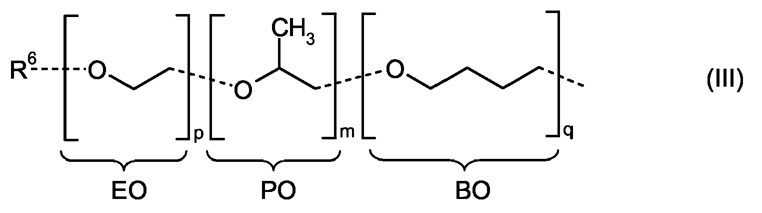

R⁶ steht für eine C₁- bis C₄-Alkylgruppe steht und die Indizes p, m und q stehen für die Werte p = 0 - 65, m = 0 - 65, q = 0 - 65. Die Summe von m, p und q ergibt einen Wert von 1 bis 65. Die Bausteine, welche sich bei der Herstellung dieser Polyolen aus Ethylenoxid, Propylenoxid und Butylenoxid ergeben und deshalb in Formel (III) als "EO", "PO" und "BO" bezeichnete werden, können, falls es sich um Copolymere handelt, zufällig oder blockartig angeordnet sein. Dies wird durch die Verwendung von gestrichelten Bindungen in Formel (II) angedeutet. Die Anordnung lässt sich durch die hierfür bekannten Verfahren erzielen.

Weiterhin können die Verbindungen der Formel (I) auch Thioester oder Amide sein, die sich beispielsweise aus den entsprechenden Methyl- oder Ethylester (R¹ = -OMe oder -OEt) und dem jeweiligen Mercaptan oder Amin herstellen lassen.

In einer weiteren bevorzugten Ausführungsform ist die Verbindung der Formel (I) eine Verbindung der Formel (V) und R¹ steht für eine, gegebenenfalls substituierte, Alkylgruppe, Cycloalkylgruppe, Arylgruppe oder Aralkylgruppe, bevorzugt eine C₁-C₆-Alkylgruppe.

In einer besonderes bevorzugten Ausführungsform stellt die Verbindung der Formel (I) Acetylbutyrolacton oder Cyclopentanon-2-carbonsäure-ethylester oder Cyclopentanon-2-carbonsäure-methylester dar.

Für die Erfindung ist es wesentlich, dass in der Verbindung der Formel (I) das Kohlenstoffatom, welches die zwei Carbonylgruppen miteinander verbindet, genau ein an dieses Kohlenstoffatom gebundenes H aufweist. Verbindungen, welche keine H oder zwei H aufweisen, ergeben die gewünschten Vorteile nicht.

Die zwei- oder mehrkomponentige Zusammensetzung enthält den Inhaltsstoff c), nämlich mindestens ein Metallsalz oder ein Metallkomplexverbindung mindestens eines Metalls ausgewählt aus der Gruppe der Übergangsmetalle, insbesondere ausgewählt aus der Gruppe umfassend Cobalt, Mangan, Vanadium, Eisen, Kupfer, Chrom und Zirkonium.

Als besonders geeignet haben sich Metallsalze oder Metallkomplexverbindungen der Metalle Cobalt, Mangan und Vanadium erwiesen.

Es können Gemische von Metallsalzen oder Metallkomplexverbindungen von unterschiedlichen Metallen oder gleichen Metallen vorhanden sein.

In einer Ausführungsform sind Mischungen von mindestens zwei Metallkomplexverbindungen von mindestens zwei Metallen vorhanden. In einer Ausführungsform ist mindestens ein Mangankomplex und ein Cobaltkomplex und/oder ein Vanadiumkomplex vorhanden. In einer besonders bevorzugten Ausführungsform ist mindestens ein Cobaltkomplex und ein Mangankomplex und/oder ein Vanadiumkomplex vorhanden.

Als besonders geeignet haben sich Metallsalze oder Metallkomplexverbindungen, insbesondere basierend auf Carbonsäuren, insbesondere Naphthenate, Octoate oder Ethylhexanoate, bevorzugt Octoate. Es können weitere Additive wie Beschleuniger und Komplexierungsmittel vorhanden sein. Besonders geeignet sind Metallsalze oder Metallkomplexverbindungen, wie sie beispielsweise von der Firma Borchers, Langenfeld, Deutschland unter der Produktereihe mit dem Handelnamen Borchers® Octa-Soligen® oder Borchers® Dry vertrieben werden.

Die zwei- oder mehrkomponentige Zusammensetzung enthält den Inhaltsstoff d), nämlich mindestens ein Peroxid oder mindestens einen Perester oder mindestens ein Hydroperoxid.

Es handelt sich hierbei einerseits um Wasserstoffperoxid und andererseits um organische Peroxide, Perester oder Hydroperoxide, wie sie kommerziell breit erhältlich sind.

Besonders bevorzugt sind Hydroperoxide. Als besonders bevorzugt sind Cumolhydroperoxid und p-Isopropylcumolhydroperoxid. Als Peroxid ist Benzoylperoxid bevorzugt. Aufgrund der exzellenten Eigenschaften und wegen des geringen Geruchs ist p-Isopropylcumolhydroperoxid besonders bevorzugt.

Als Perester hat sich insbesondere Perbenzoesäure-tert.-butylester als besonderes geeignet erwiesen.

Die zwei- oder mehrkomponentige Zusammensetzung kann weitere Bestandteile umfassen, insbesondere handelt es sich hierbei um Füllstoffe, Thixotropiermittel, Schlagzähigkeitsmodifikatoren, Katalysatoren, Aktivatoren, Chelatliganden, Lösungsmittel, Weichmacher, Pigmente, Farbstoffe, Additive wie Haftvermittler, Verlaufsmittel, Emulgatoren, Inhibitoren sowie UV- und Wärmestabilisatoren etc.

Zur Beschleunigung der Reaktion kann ein Aktivator verwendet werden. Geeignete Aktivatoren sind dem Fachmann bekannt. Als nicht beschränkende Beispiele seien genannt: tertiäre Amine wie N,N-Dimethylanilin, N,N-Diethylanilin, N,N-Dimethyltoluidin, N,N-Diethyltoluidin, N,N-bis(2-hydroxyethyl)-p-Toluidin, ethoxylierte p-Toluidine, N,N-bis(2-hydroxyethyl)-p-toluidin etc. Als besonders bevorzugte Aktivatoren gelten Toluidinderivate, insbesondere N,N-Dialkyltoluidine. Geeignete teriäre Amine, insbesondere p-Toluidine, können auch alkoxyliert sein.

Als Füllstoffe gelten beispielsweise Kreiden, bevorzugt beschichtete Kreiden, sowie Quarzmehl, Bariumsulfat, pyrogenes Siliziumdioxid, gefüllte oder hohle Glas- oder Keramikkugeln.

Als Weichmacher sind insbesondere Phthalate und Adipate bevorzugt, insbesondere Düsononylphtalat, Diisodecylphthalat (DIDP) oder Dioctyladipat (DOA).

Als Synergist sind die dem Fachmann hierfür bekannten Substanzen möglich. Insbesondere handelt es sich hierbei um Verbindungen der Metalle Kalium, Calcium und Barium. Insbesondere basieren diese Verbindungen auf Carbonsäurederivaten. Besonders geeignet sind und um Kalium-, Calcium-oder Barium-Octaoate.

Schlagzähigkeitsmodifikatoren werden verwendet, um die Schlagzähigkeit der ausgehärteten Zusammensetzung zu verbessern. Bevorzugt sind Flüssigkautschuke und Core-Shell Polymere.

Als Flüssigkautschuke sind insbesondere diejenigen, welche unter dem Handelsnamen Hycar® von Noveon vertrieben werden. Beispielsweise können dies Acrylgruppen modifizierte Butadien-Acrylonitril-Copolymere, wie beispielsweise diejenigen aus der Produktereihe Hycar® VTBNX sein.

Als Core-Shell Polymere sind bevorzugt insbesondere solche Core-Shell Polymere, wie sie unter dem Handelsnamen Paraloid® von Rohm and Haas kommerziell erhältlich sind.

Es hat sich besonders vorteilhaft erwiesen, wenn eine Mischung von Flüssigkautschuk und Core-Shell-Polymer als Schlagzähigkeitsmodifikatoren verwendet werden.

Bevorzugt umfasst die zwei- oder mehrkomponentige Zusammensetzung neben den Inhaltsstoffen a), b), c) und d) zusätzlich Aktivatoren, Füllstoffe und allenfalls Weichmacher.

Noch mehr bevorzugt enthält sie zusätzlich noch Schlagzähigkeitsmodifikatoren.

Es ist bevorzugt, wenn die zwei- oder mehrkomponentige Zusammensetzung möglichst frei von riechenden Verbindungen sind. Insbesondere sind solche Verbindungen, welche einen starken und unangenehmen Geruch, wie Styrol oder Methyl(meth)acrylat, aufweisen, unerwünscht.

Die Aufteilung der Inhaltsstoffe a), b) und den weiteren möglichen Inhaltsstoffen auf die Komponenten **K1, K2** und auf allenfalls weitere mögliche Komponenten kann sehr unterschiedlich erfolgen.

Es ist wichtig, dass die Inhaltsstoffe c) und d) nicht in derselben Komponente vorhanden sein dürfen. Deshalb umfasst die Komponente **K1** mindestens den Inhaltsstoff c) und die Komponente **K2** umfasst mindestens den Inhaltsstoff d).

In einer Ausführungsform ist die zwei- oder mehrkomponentige Zusammensetzung eine dreikomponentige Zusammensetzung. Als bevorzugte dreikomponentige Zusammensetzung ist eine solche mit einer dritten Komponente **K3,** welche mindestens den Inhaltsstoff a) umfasst; und wobei zumindest der Inhaltsstoff b) Teil von der Komponenten **K1** oder **K2** oder **K3** ist. Es ist hier bevorzugt, dass der Inhaltsstoff b) Teil der Komponente **K1** ist.

In einer anderen, bevorzugten, Ausführungsform ist die zwei- oder mehrkomponentige Zusammensetzung eine zwei komponentige Zusammensetzung. In einer Ausführungsform ist der Inhaltsstoff a) Teil der Komponente **K2.** Der Inhaltsstoff b) ist dann Teil der Komponente **K1** oder **K2,** bevorzugt jedoch Teil der Komponente **K1.** Diese Ausführungsform ist insbesondere dann bevorzugt, wenn das (Meth)acrylat eine Ether-Gruppe aufweist, insbesondere bei Tetrahydrofurfuryl(meth)acrylat.

In einer anderen, bevorzugten, Ausführungsform einer zweikomponentigen Zusammensetzung ist der Inhaltsstoff a) Teil der Komponente **K1.** Der Inhaltsstoff b) ist dann Teil der Komponente **K1** oder **K2,** bevorzugt jedoch Teil der Komponente **K1.**

Dies ist generell bevorzugt, wenn der Inhaltsstoff b) in der Komponente **K1** vorliegt.

Der Anteil der Verbindung der Formel (I) beträgt vorzugsweise 0.1 bis 20 Gew.-%, insbesondere 0.1 bis 10 Gew.-%, bevorzugt 1 bis 5 Gew.-%, bezogen auf das Gewicht der zwei- oder mehrkomponentigen Zusammensetzung. Insbesondere, wenn der Rest R¹ höhermolekular ist, typischerweise wenn der Rest R¹ ein Molekulargewicht von mehr als 100 g/mol, insbesondere mehr als 400 g/mol, aufweist, ist es bevorzugt, dass der Anteil der Verbindung der Formel (I) 0.1 bis 20 Gew.-%, insbesondere 1 bis 20 Gew.-%, bevorzugt 3 bis 10 Gew.-%, beträgt.

Der Anteil der Verbindung des mindestens einen Metallsalzes oder der Metallkomplexverbindung, als Metall berechnet, beträgt vorzugsweise 0.001 bis 0.5 Gew.-%, insbesondere 0.01 bis 0.4 Gew.-%, bevorzugt 0.01 bis 0.2 Gew.-%, bezogen auf das Gewicht der zwei- oder mehrkomponentigen Zusammensetzung.

Der Anteil des mindestens einen (Meth)acrylates weist von den Inhaltsstoffen a), b), c) und d) vorzugsweise gewichtsmässig den grössten Anteil auf. Typischerweise ist das Verhältnis a)/[a)+b)+c)+d)] grösser als 0.7, insbesondere 0.8-0.999, bevorzugt 0.9- 0.99.

Der Anteil an (Meth)acrylat beträgt typischerweise mehr als 20 Gew.-%, insbesondere 30 - 99 Gew.-%, bevorzugt 40 - 95 Gew.-%, bezogen auf das Gewicht der zwei- oder mehrkomponentigen Zusammensetzung.

Es ist bevorzugt, dass der Inhaltsstoff b) in Bezug auf Inhaltsstoff c) stöchiometrisch oder im Überschuss eingesetzt wird. Das heisst, dass das Molverhältnis [Formel (I)]/(n * [M]) ≥ 1 ist, wobei [M] für die Menge des Metalls des Metallsalzes oder der Metallkomplexverbindung in Mol und [Formel (I)] für die Menge der Verbindung der Formel (I) in Mol sowie n für den Index in Formel (I) stehen.

Es hat sich gezeigt, dass mit einer Mischung enthaltend mindestens die Inhaltsstoffe b) und c) die Sauerstoffinhibierung in der Polymerisation von (Meth)acrylaten drastisch reduziert, in besonders bevorzugten Fällen gar eliminiert, werden kann.

Die Komponenten **K1, K2** und allenfalls die weiteren Komponenten werden in voneinander getrennt gelagert. Beispielsweise kann dies in Fässern, Hobbocks oder Kartuschen erfolgen. Dieses von einander getrennte Lagern umfasst jedoch auch das Lagern in Verpackungen, welche zwei miteinander durch mindestens eine Trennwand verbundenen Kammern aufweisen.

In einer Ausführungsform sind dies Doppelkartuschen, wie sie von Zweikomponenten-Klebstoffen her bekannt sind, wobei die Anordnung der Kammern unterschiedlich ausgestaltet sein kann. Beispielsweise können dies zylindrische Kammern sein, welche nebeneinander (parallel) oder cozentrisch angeordnet sein können. Die Wandungen der Kammern können starr oder flexibel sein. Besonders geeignet haben sich sogenannte Zwillingskartuschen (parallele Anordnung) oder Kartuschen-in-Kartuschen-Doppelkartuschen (cozentrische Anordnung). Eine beispielhafte Anordnung der Kammern und deren Ausgestaltung lässt sich in WO 01/44074 oder in US 6,433,091 B1 finden.

In einer Ausführungsform kann eine Komponente in einer Verpackung vorhanden sein, aus welcher diese Komponente einem Strom der anderen Komponente zudosiert und zugemischt wird. Ein Beispiel für eine derartige Verpackung beziehungsweise Zudosierung lässt sich beispielsweise in WO 95/24556 finden. Derartige Verpackungs-/Dosiervorrichtungen werden vorteilhaft auf einen Kartuschenausgang aufschraubt oder auf eine Auslassöffnung einer Klebstoffpumpe.

In einer weiteren Ausführungsform erfolgt die Zumischung der einen Komponente zur anderen Komponente und Vermischung mit Hilfe eines dynamischen Mischers.

In einer weiteren Ausführungsform wird die eine Komponente zur anderen Komponente eingedüst, insbesondere über eine Mehrzahl von verteilten Düsen und anschliessend gemischt.

Die Einmischung der einen Komponente in die andere Komponente kann homogen erfolgen oder in Schichten. Schichten werden insbesondere dann erhalten, wenn eine geringe Anzahl, typischerweise zwischen 3 und 10, Mischelemente in einem Statikmischer angeordnet sind.

Ist eine homogene Einmischung erwünscht, werden vorzugsweise entweder ein dynamischer Mischer oder eine grosse Anzahl von Mischelementen in einem Statikmischer verwendet.

Bei der Anwendung werden die Komponenten **K1, K2** und allenfalls weitere vorhandene Komponenten miteinander unmittelbar vor oder während der Applikation vermischt. Bei mehr als zwei Komponenten können alle Komponenten gleichzeitig oder zeitlich verschoben miteinander gemischt werden.

Die Mischung kann manuell oder maschinell erfolgen. Die Mischung erfolgt vorzugsweise mit Hilfe eines Statikmischers oder mit Hilfe eines dynamischen Mischers.

Die zwei- oder mehrkomponentige Zusammensetzung kann insbesondere als Kleb- oder Dichtstoff oder als Beschichtung verwendet werden.

Bei der Verwendung als Klebstoff kann das folgende Verfahren verwendet werden:
- Mischen der zwei oder mehr Komponenten der zwei- oder mehrkomponentigen Zusammensetzung
- Applizieren dieser Mischung auf eine Oberfläche eines Substrates S1
- Kontaktieren einer Oberfläche eines weiteren Substrates **S2** mit der auf dem Substrat **S1** applizierten Mischung, wobei die Substrate **S1** und **S2** aus gleichem oder unterschiedlichem Material sind
- Aushärten der gemischten Zusammensetzung

Bei der Verwendung als Dichtstoff kann das folgende Verfahren verwendet werden:
- Mischen der zwei oder mehr Komponenten der zwei- oder mehrkomponentigen Zusammensetzung
- Applizieren dieser Mischung auf eine Oberfläche eines Substrates **S1**
- Kontaktieren einer Oberfläche eines weiteren Substrates **S2** mit der auf dem Substrat **S1** applizierten Mischung, wobei die Substrate **S1** und **S2** aus gleichem oder unterschiedlichem Material sind
- Aushärten der gemischten Zusammensetzung

Bei der Verwendung als Beschichtungsmittel kann das folgende Verfahren verwendet werden:
- Mischen der zwei oder mehr Komponenten der zwei- oder mehrkomponentigen Zusammensetzung
- Beschichten eines Substrates **S1** mit dieser Mischung
- Aushärten der gemischten Zusammensetzung an Luft

Die Substrate **S1** und **S2** mit denen die gemischte zwei- oder mehrkomponentige Zusammensetzung in Kontakt kommt kann vielfältiger Natur sein. Es kann sich hierbei um natürliche oder künstliche Untergründe handeln. Insbesondere handelt es sich um mineralische Untergründe wie beton, Stein, Mauerwerk, Fels und dergleichen, oder Metalle und Metalllegierungen, wie beispielsweise Aluminium, Stahl, Messing, Kupfer oder Blech, Kunststoffe wie Polyvinylchlorid (PVC), Acrylonitril-Butadien-StyrolCopolymere (ABS), SMC (Sheet Molding Compound), Polycarbonat (PC), Polyamid (PA), Polyester (PE), Polyoxymethylen (POM), Polyolefine, insbesondere Polyethylen (PE) oder Polypropylen (PP), bevorzugt mit Plasma, Corona oder Flammen oberflächenbehandeltes PP oder PE, oder polymere Materialien wie Lacke.

Die mit einem derartigen Verfahren hergestellten Artikel finden breite Verwendung in Bau, insbesondere Hoch- und Tiefbau und in der Industrie, insbesondere im Fahrzeugbau.

Die zwei- oder mehrkomponentigen Zusammensetzungen zeichnen sich durch eine markante Reduzierung, in besonders bevorzugten Fälle gar durch eine vollständige Eliminierung, der Sauerstoffinhibierung aus. Dies wirkt sich dadurch aus, dass die Zusammensetzungen schnell klebfrei und staubtrocken sind, ohne dass eine aufwändige Nachbehandlung mittels Hitze oder Entfernung der klebrigen Schicht erfolgen muss. Dies ist insbesondere in den Anwendungen wichtig, in denen grosse Flächen der auszuhärtenden Zusammensetzung in Kontakt mit der Luft sind. Deshalb ist die Anwendung als Beschichtung oder dickschichtigen Verklebung oder Abdichtung eine Anwendung, bei der die Vorteile der erfindungsgemässen Zusammensetzung besonders zu Tage treten.

Als Beschichtung sind einerseits dünnschichtige Beschichtungen zu erwähnen, beispielsweise als Lack oder Schutzbeschichtung. Andererseits handelt es sich bei Beschichtungen um dickschichtige Beschichtungen oder beläge, wie beispielsweise als Fussböden.

Für Applikationen von grossen Flächen und/oder in Innenräumen ist es äusserst vorteilhaft, wenn die applizierte Zusammensetzung bei und nach der Applikation möglichst geruchsfrei ist. Deshalb sind die zwei- oder mehrkomponentigen Zusammensetzungen besonders geeignet für das Herstellen von Fussböden oder für das Beschichten innerhalb von Gebäuden oder für Beschichtungen, Verklebungen und Abdichtungen in geschlossenen oder schlecht belüfteten Innenräumen. Insbesondere in Wohn- und Arbeitsräumen aber auch im Fahrzeugbau ist die Forderung nach besonders geruchsfreien Beschichtungs-, Dicht- und Klebstoffen besonders gross.

Die zwei- oder mehrkomponentigen Zusammensetzung zeichnen sich durch eine sehr schnelle Aushärtung aus. Dies ist insbesondere dann sehr wichtig, wenn die hergestellten Artikel schnell belastet oder weiterverarbeitet werden müssen, sei dies zum Beispiel ein Überschichten oder Begehen einer Beschichtung oder ein Bewegen oder Transportieren eines Kleb- oder Dichtverbundes.

Deshalb sind die Zusammensetzungen insbesondere als Montageklebstoffe geeignet. Insbesondere eigenen sich derartige Montageklebstoffe für den Einsatz für Verkleben an einer Fertigungslinie in der industriellen Fertigung von Artikeln, insbesondere von Gebrauchsgegenständen wie beispielsweise Weisswaren, wie Waschmaschinen, oder von Fahrzeugen, insbesondere von Automobilen.

### Beispiele

### Herstellung von zwei- oder mehrkomponentige Zusammensetzungen Testmethoden

Von den im Weiteren beschriebenen Zusammensetzungen wurden circa 4.5 ml auf eine mit einem Rand versehene Glasplatte aufgetragen. Es wurde somit eine Beschichtung der Fläche 290 mm x 15 mm und einer Dicke von ca. 1 mm erhalten.

### Es wurde darauf die folgenden Testmethoden verwendet:

### -Härtungszeit Grundschicht ("t_{H/GS}")

Es wurde in regelmässigen Abständen ein Metall Spatel in die Beschichtung eingetaucht und festgestellt, ob die Glasplatte berührt werden konnte. Als Härtungszeit der Grundschicht wurde der Zeitpunkt, gemessen nach Zumischen des letzten Inhaltsstoffes, angegeben, bei dem der Metallspatel die Glasoberfläche nicht mehr berühren konnte.

### -Trockenzeit ("t_{T}")

Zur Bestimmung der Trockenzeit wurde ein "Drying Recorder" der Firma "The Mickle Laboratory Engineering Co. Ltd.", Gomshall, Surrey (England) verwendet. Es wurde über eine Messdistanz von 29 cm gemessen, welche in 6 h durchlaufen wurde. Bei den sehr langsamen Referenzsystemen wurde die Strecke in 24 Stunden durchlaufen. Anstelle einer Nadel wurde eine aufgeschnittene Kunststoffpipette mit einem Spitzendurchmesser von ca. 1 mm verwendet, die derart platziert wurde, dass sich die Pipettenspitze ca. 1 mm oberhalb der Beschichtungsoberfläche befand. Sobald die Grundschicht des Substrates angehärtet war (manuelle Prüfung durch Berührung mit einem Spatel), wurde in die obere Öffnung der aufgeschnittenen Pipette Sand (Korngrösse 0.08 - 0.2mm) eingefüllt und mittels dem Gerät entlang der Oberfläche verschoben. Die über die Beschichtungsoberfläche geführte, sandgefüllte Pipette hinterliess so eine Sandspur auf der Oberfläche. Nach dem Entfernen der Probe aus dem Prüfgerät am Ende der Messzeit wurde der Sand mit einem Pinsel leicht abgewischt. Dabei wurde derjenige Punkt als "Trockenpunkt" bestimmt, an dem kein Sand mehr auf der Oberfläche haften blieb. Aus der vom Startpunkt bis zum "Trockenpunkt" zurückgelegten Strecke und der Härtungszeit der Grundschicht wurde die Trockenzeit berechnet.

### Variation des Inhaltsstoffes b)

Es wurden 10.0 g Tetrahydrofurfurylmethacrylat (SR203, Sartomer), 0.10 g Bisomer PTE® (Cognis), 0.10 g Octa-Soligen® Cobalt-12 (Borchers, Cobaltgehalt: 12%, (0.2 mmol Co)) in einer Polyethylendose zusammengegeben und auf einem Speedmixer während 30 Sekunden mit 3000 rpm vermischt. Anschliessend wurden jeweils 2 mmol einer Dicarbonylverbindung ("DCV") gemäss Tabelle 1 beigegeben und es wurde mit einem Magnetrührstab während 5 Sekunden verrührt. Zu dieser Lösung wurden 0.08 g Cumolhydroperoxid (80%-ig in Cumol) gegeben und es wurde wiederum 5 Sekunden mit einem Magnetrührstab verrührt.

Von der so erhaltenen Mischung wurden circa 4.5 ml auf eine mit einem Rand versehene Glasplatte aufgetragen. Es wurde somit eine Beschichtung der Fläche 290 mm x 15 mm und einer Dicke von ca. 1 mm erhalten und die Härtungszeit der Grundschicht ("t_{H/GS}") und die Trockenzeit ("t_{T}") wie vorgängig beschreiben ermittelt.

**Tabelle 1. Variation der Dicarbonylverbindung**

| Bezeichnung | Dicarbonylverbindung (DCV) | [Co]/[DCV] [mol]/[mol] | t_{H/GS} [min] | t_{T} [min] |
|---|---|---|---|---|
| ***Ref.1*** | | - | 200 | 310 |
| ***Ref.2*** | 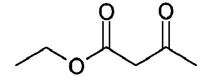 | 1:10 | 200 | 320 |
| ***Ref.3*** | 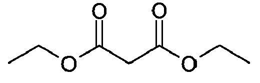 | 1:10 | 210 | 320 |
| ***Ref.4*** | 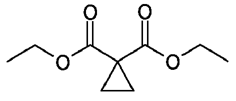 | 1:10 | 200 | 310 |
| ***Ref.5*** | 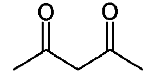 | 1:10 | >24h | >24h |
| **1** | 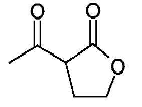 | 1:10 | 25 | 80 |
| **2** | 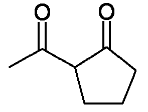 | 1:10 | 25 | 150 |
| **3** | 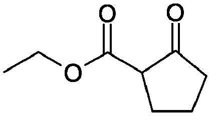 | 1:10 | 35 | 45 |
| **4** | 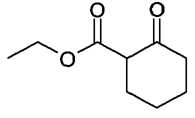 | 1:10 | 60 | 150 |
| **5** | 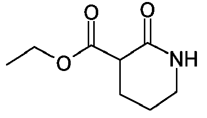 | 1:10 | 40 | 160 |
| **6** | 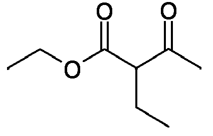 | 1:10 | 145 | 250 |

### Variation des Verhältnis Inhaltsstoffes b) zu Inhaltsstoff c)

Es wurden 10.0 g Tetrahydrofurfurylmethacrylat (SR203, Sartomer), 0.10 g Bisomer PTE® (Cognis), 0.10 g Octa-Soligen® Cobalt-12 (Borchers, Cobaltgehalt: 12%, (0.2 mmol Co)) in einer Polyethylendose zusammengegeben und auf einem Speedmixer während 30 Sekunden mit 3000 rpm vermischt. Anschliessend wurde 2-Acetylbutyrolacton (ABL) in den in Tabelle 2 angegebenen molaren Mengen zugegeben und es wurde mit einem Magnetrührstab während 5 Sekunden verrührt. Zu dieser Lösung wurden 0.08 g Cumolhydroperoxid (80%-ig in Cumol) gegeben und es wurde wiederum 5 Sekunden mit einem Magnetrührstab verrührt.

Von der so erhaltenen Mischung wurden circa 4.5 ml auf eine mit einem Rand versehene Glasplatte aufgetragen. Es wurde somit eine Beschichtung der Fläche 290 mm x 15 mm und einer Dicke von ca. 1 mm erhalten. Die Härtungszeit der Grundschicht ("t_{H/GS}") und die Trockenzeit ("t_{T}") wurden wie vorgängig beschrieben bestimmt. Die Resultate sind in Tabelle 2 wiedergegeben.

**Tabelle 2. Variation des Verhältnis der Inhaltsstoffe c)/ b).**

| | [ABL] [mmol] | [Co]/[ABL] [mol]/[mol] | t_{H/GS} [min] | t_{T} [min] |
|---|---|---|---|---|
| ***Ref.1*** | - | - | 200 | 310 |
| ***7*** | 0.2 | 1:1 | 75 | 260 |
| **8** | 0.4 | 1:2 | 65 | 215 |
| **9** | 0.8 | 1:4 | 45 | 165 |
| **10** | 1.2 | 1:6 | 30 | 140 |
| ***11*** | 1.6 | 1:8 | 25 | 100 |
| ***12*** | 2 | 1:10 | 25 | 80 |

Eine analoge Reihe wurde mit Cyclopentanon-2-carbonsäure-ethylester (CPCE) anstelle von ABL als Inhaltsstoff b) durchgeführt. Die gemessenen Resultate sind in Tabelle 3 aufgeführt.

**Tabelle 3. Variation des Verhältnis der Inhaltsstoffe c)/ b).**

| | [CPCE] [mmol] | [Co]/[CPCE] [mol]/[mol] | t_{H/GS} [min] | t_{T} [min] |
|---|---|---|---|---|
| ***Ref.1*** | - | - | 200 | 310 |
| ***13*** | 0.2 | 1:1 | 120 | 210 |
| **14** | 0.4 | 1:2 | 60 | 170 |
| **15** | 0.8 | 1:4 | 50 | 105 |
| **16** | 1.2 | 1:6 | 45 | 75 |
| **17** | 1.6 | 1:8 | 40 | 50 |
| ***18*** | 2 | 1:10 | 35 | 45 |

### Variation der Aktivatorkonzentration

Es wurden 10.0 g Tetrahydrofurfurylmethacrylat (SR203, Sartomer), 0.10 g Octa-Soligen® Cobalt-12 (Borchers, Cobaltgehalt: 12%, (0.2 mmol Co)) und gemäss Tabelle 4 unterschiedliche Mengen an Bisomer PTE® (Cognis) in einer Polyethylendose zusammengegeben und auf einem Speedmixer während 30 Sekunden mit 3000 rpm vermischt. Anschliessend wurden 2 mmol Acetylbutyrolacton (ABL) zugegeben und es wurde mit einem Magnetrührstab während 5 Sekunden verrührt. Zu dieser Lösung wurden 0.08 g Cumolhydroperoxid (80%-ig in Cumol) zugegeben und es wurde wiederum 5 Sekunden mit einem Magnetrührstab verrührt.

Von der so erhaltenen Mischung wurden circa 4.5 ml auf eine mit einem Rand versehene Glasplatte aufgetragen. Es wurde somit eine Beschichtung der Fläche 290 mm x 15 mm und einer Dicke von ca. 1 mm erhalten. Die Härtungszeit der Grundschicht ("t_{H/GS}") und die Trockenzeit ("t_{T}") wurden wie vorgängig beschrieben bestimmt. Die Resultate sind in Tabelle 4 wiedergegeben.

**Tabelle 4. Variation des Aktivators. *bezogen auf die (Meth)acrylatmenge.**

| | PTE [%]* | [Co]/[ABL] [mol]/[mol] | t_{H/GS} [min] | t_{T} [min] |
|---|---|---|---|---|
| ***Ref.1*** | - | - | 200 | 310 |
| **19** | 0.00 | 1:/10 | 30 | 40 |
| **20** | 0.25 | 1:/10 | 30 | 45 |
| **21** | 0.50 | 1:/10 | 30 | 55 |
| **22** | 0.75 | 1:/10 | 25 | 65 |
| **23** | 1.00 | 1:/10 | 25 | 80 |
| **24** | 1.25 | 1:/10 | 25 | 115 |

### Variation der (Meth)acrylate (Inhaltsstoff a)

Es wurden 10.0 g des jeweiligen (Meth)acrylates gemäss Tabelle 5 mit 0.10 g Bisomer PTE® (Cognis) und 0.10 g oder 0 g Octa-Soligen® Cobalt-12 (Borchers, Cobaltgehalt: 12%, (0.2 mmol Co)) in einer Polyethylendose zusammengegeben und auf einem Speedmixer während 30 Sekunden mit 3000 rpm vermischt. Anschliessend wurden 2 mmol Acetylbutyrolacton (ABL) zugegeben und es wurde mit einem Magnetrührstab während 5 Sekunden verrührt. Zu dieser Lösung wurden 0.08 g Cumolhydroperoxid (80%-ig in Cumol) gegeben und es wurde wiederum 5 Sekunden mit einem Magnetrührstab verrührt.

Von der so erhaltenen Mischung wurde circa 4.5 ml auf eine mit einem Rand versehene Glasplatte aufgetragen. Es wurde somit eine Beschichtung der Fläche 290 mm x 15 mm und einer Dicke von ca. 1 mm erhalten. Die Härtungszeit der Grundschicht ("t_{H/GS}") und die Trockenzeit ("t_{T}") wurden wie vorgängig beschrieben bestimmt. Die Resultate sind in Tabelle 5 wiedergegeben.

**Tabelle 5. Variation des (Meth)acrylates.**

| | (Meth)acrylat | [Co]/[ABL] [mol]/[mol] | t_{H/GS} [min] | t_{T} [min] |
|---|---|---|---|---|
| ***Ref.6*** | 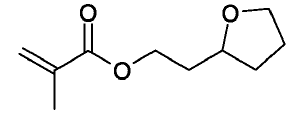 | - | 200 | 310 |
| ***Ref.7*** | 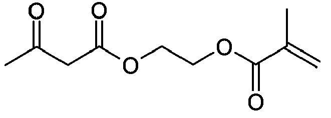 | - | 30 | 630 |
| ***Ref.8*** | 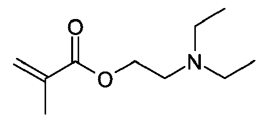 | - | > 24 h | > 24 h |
| ***Ref.9*** | 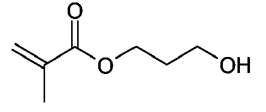 | - | 5 | 210 |
| ***Ref.10*** | 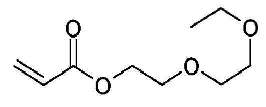 | - | 80 | 400 |
| **25** | 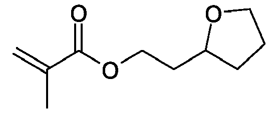 | 1:10 | 25 | 80 |
| **26** | 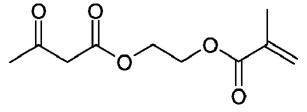 | 1:10 | 4 | 170 |
| **27** | 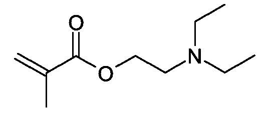 | 1:10 | 110 | 280 |
| **28** | 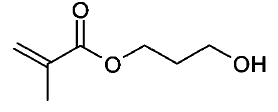 | 1:10 | 3 | 35 |
| **29** | 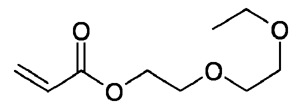 | 1:10 | 50 | 120 |

### Variation des Metallsalzes oder der Metallkomplexverbindung (Inhaltsstoff c)

Es wurden 10.0 g Tetrahydrofurfurylmethacrylat (SR203, Sartomer) mit 0.10 g Bisomer PTE® (Cognis) und mit der in Tabelle 6 angegebenen Menge Metallsalz oder Metallkomplexverbindung (alle erhältlich von Borchers, Deutschland) in einer Polyethylendose zusammengegeben und auf einem Speedmixer während 30 Sekunden mit 3000 rpm vermischt. Anschliessend wurden 2 mmol Acetylbutyrolacton (ABL), beziehungsweise 0 mmol in den die Referenzbeispielen, zugegeben und es wurde mit einem Magnetrührstab während 5 Sekunden verrührt. Zu dieser Lösung wurden 0.08 g Cumolhydroperoxid (80%-ig in Cumol) gegeben und es wurde wiederum 5 Sekunden mit einem Magnetrührstab verrührt.

Von der so erhaltenen Mischung wurden circa 4.5 ml auf eine mit einem Rand versehene Glasplatte aufgetragen. Es wurde somit eine Beschichtung der Fläche 290 mm x 15 mm und einer Dicke von ca. 1 mm erhalten. Die Härtungszeit der Grundschicht ("t_{H/GS}") und die Trockenzeit ("t_{T}") wurden wie vorgängig beschrieben bestimmt. Die Resultate sind in Tabelle 6 wiedergegeben.

### Herstellung von gefüllten zwei-oder mehrkomponentigen Zusammensetzungen

Es wurden gefüllte zwei komponentige Zusammensetzungen gemäss Tabelle 7 hergestellt. Zur Herstellung der ersten Komponente **K1** wurde wie folgt vorgegangen. Zum (Meth)acrylat wurde zuerst der Flüssigkautschuk in einem Dissolver gut zugemischt. Danach wurden sukzessive das Core-Shell Polymer und die Kreide gut eindispergiert. Nach Abkühlen auf eine Temperatur von unter 30°C wurde das Hydroperoxid, Peroxid oder der Perester zugegeben und nicht entgast.

Die zweite Komponente **K2** wurde wie folgt hergestellt. Die Kreide und Weichmacher und gegebenenfalls Acetylbutyrolacton und gegebenenfalls Aktivator wurden in einem Speedmixer gut vermischt. Anschliessend wurden die Metall-Katalysatorlösungen zugegeben und ebenfalls im Speedmixer gut eingerührt. Es wurde nicht entgast.

Die Zusammensetzungen von Tabelle 8 sind analog hergestellt, nur wurde hier das Acetylbutyrolacton als Bestandteil der Komponente **K1** formuliert.

**Tabelle 6. Variation des Metallsalzes oder Metallkomplexverbindung. *M= jeweiliges Metall.**

| | Inhaltsstoff c) | [M*]/[ABL] [mmol]/[mmol] | t_{H/GS} [min] | t_{T} [min] |
|---|---|---|---|---|
| ***Ref.11*** | Octa-Soligen® Cobalt-12 | 0.2/0 | 200 | 310 |
| | (Co-Gehalt: 12%) | | | |
| ***Ref.12*** | Octa-Soligen® Mangan-10 | 0.2/0 | > 24 h | > 24 h |
| | (Mn-Gehalt: 10%) | | | |
| ***Ref.13*** | Dry 0411 HS | 0.2/0 | > 24 h | > 24 h |
| | (Mn-Gehalt: 7%) | | | |
| ***Ref.14*** | Dry VP-0132 | 0.1/0 | 35 | ca. 720 |
| | (V-Gehalt: 5%) | | | |
| ***Ref.15*** | Octa-Soligen® Eisen 7/8 | 0.2/0 | >5 d | >5 d |
| | (Eisengehalt: 7.5%) | | | |
| ***30*** | Octa-Soligen® Cobalt-12 | 0.2/2 | 25 | 80 |
| | (Co-Gehalt: 12%) | | | |
| ***31*** | Octa-Soligen® Mangan-10 | 0.2/2 | 25 | ca.600 |
| | (Mn-Gehalt: 10%) | | | |
| ***32*** | Dry 0411 HS | 0.2/2 | 10 | 20 |
| | (Mn-Gehalt: 7%) | | | |
| ***33*** | Dry VP-0132 | 0.1/2 | 5 | 10 |
| | (V-Gehalt: 5%) | | | |
| ***34*** | Octa-Soligen® Eisen 7/8 | 0.2/2 | ca. 16 h | ca.50 h |
| | (Eisengehalt: 7.5%) | | | |

**Tabelle 7. Gefüllte Zusammensetzungen. *p-IPC=p-isopropylcumol**

| **K1** | ***Ref.15*** | ***Ref.16*** | ***Ref.17*** | ***Ref.18*** | ***35*** | ***36*** | ***37*** | ***38*** |
|---|---|---|---|---|---|---|---|---|
| TH FMA (SR203, Sartomer) | 52 | 52 | 52 | 52 | 52 | 52 | 52 | 52 |
| Hycar® VTBNX 1300x33 | 12 | 12 | 12 | 12 | 12 | 12 | 12 | 12 |
| Paraloid® 2300 | 15 | 15 | 15 | 15 | 15 | 15 | 15 | 15 |
| Kreide (Socal) | 20 | 20 | 20 | 20 | 20 | 20 | 20 | 20 |
| p-Isopropylcumolhydroperoxid (70% in p-IPC*) | 1 | | | | 1 | | | |
| Cumolhydroperoxid (80 % in Cumol) | | 0.69 | | | | 0.69 | | |
| Benzoylperoxid (40% in Phthalat) | | | 2.2 | | | | 2.2 | |
| Benzoesäure-tert. Butylperester | | | | 0.69 | | | | 0.69 |
| Total | 100.00 | 99.69 | 101.20 | 99.69 | 100.00 | 99.69 | 101.20 | 99.69 |

| **K2** | | | | | | | | |
|---|---|---|---|---|---|---|---|---|
| Octa-Soligen® Cobalt-12 HS (Co-Geh.: 12%) | 1.00 | 1.00 | 1.00 | 1.00 | 1.00 | 1.00 | 1.00 | 1.00 |
| Acetylbutyrolacton | 0.00 | 0.00 | 0.00 | 0.00 | 1.30 | 1.30 | 1.30 | 1.30 |
| Palatinol® N (BASF) | 3.33 | 3.33 | 3.33 | 3.33 | 2.03 | 2.03 | 2.03 | 2.03 |
| Kreide (Socal) | 5.67 | 5.67 | 5.67 | 5.67 | 5.67 | 5.67 | 5.67 | 5.67 |
| Total | 10.00 | 10.00 | 10.00 | 10.00 | 10.00 | 10.00 | 10.00 | 1.00 |
| working life [min] | 60 | 60 | >24 h | 18 h | 1.8 | 3 | 4 | 3 |
| t_{T} [min] | 2.5 h | 2.5 h | >24 h | 20 h | 30 | 30 | 45 | 45 |

**Tabelle 8. Gefüllte Zusammensetzungen.**

| **K1** | ***Ref.19*** | ***Ref.20*** | ***Ref.21*** | ***Ref.22*** | **39** | ***40*** | ***41*** | ***42*** |
|---|---|---|---|---|---|---|---|---|
| TH FMA (SR203, Sartomer) | 54 | 54 | 54 | 54 | 54 | 54 | 54 | 54 |
| Hycar® VTBNX 1300x33 | 12 | 12 | 12 | 12 | 12 | 12 | 12 | 12 |
| Paraloid® 2300 | 15 | 15 | 15 | 15 | 15 | 15 | 15 | 15 |
| Kreide (Socal) | 18 | 18 | 18 | 18 | 18 | 18 | 18 | 18 |
| Acetylbutyrolacton | 0 | 0 | 0 | 0 | 1.3 | 1.3 | 1.3 | 1.3 |
| Cumolhydroperoxid (80 % in Cumol) | 0.69 | 0.69 | 0.69 | 0.69 | 0.69 | 0.69 | 0.69 | 0.69 |
| Total | 99.69 | 99.69 | 99.69 | 99.69 | 100.99 | 100.99 | 100.99 | 100.99 |

| **K2** | | | | | | | | |
|---|---|---|---|---|---|---|---|---|
| Dry VP-0132(V-Geh.: 5%) | 0.17 | 0.17 | 0.00 | 0.00 | 0.17 | 0.17 | 0.00 | 0.00 |
| Octa-Soligen® Mangan-10(Mn-Geh.:10%) | 0.00 | 0.00 | 0.17 | 0.17 | 0.00 | 0.00 | 0.17 | 0.17 |
| Octa-Soligen® Cobalt-12 HS (Co-Geh.: 12%) | 0.83 | 0.83 | 0.83 | 0.83 | 0.83 | 0.83 | 0.83 | 0.83 |
| Bisomer® PTE (Cognis) | 0.00 | 1.00 | 0.00 | 1.00 | 0.00 | 1.00 | 0.00 | 1.00 |
| Palatinol® N (BASF) | 3.33 | 2.33 | 3.33 | 2.33 | 3.33 | 2.33 | 3.33 | 2.33 |
| Kreide (Socal) | 5.67 | 5.67 | 5.67 | 5.67 | 5.67 | 5.67 | 5.67 | 5.67 |
| Total | 10.00 | 10.00 | 10.00 | 10.00 | 10.00 | 10.00 | 10.00 | 10.00 |
| working life [min] | 50 | 6 | 120 | 20 | 3 | 1.5 | 3 | 2.5 |
| t_{T} [h] | 3 | 3 | 3 | 3 | 2 | 1.5 | 2 | 2 |

Die Komponente **K1** und **K2** wurden in eine Dualkartusche **(K1/K2** = 10/1 = v/v) gefüllt und als Raupen von 1 cm Breite appliziert. Als "working life" in Tabelle 7 und 8 wurde die Offenzeit des Statikmischers angegeben. Die Trockenzeit wurde durch bestreuen mit Sand bestimmt (manuell). Als Trockenzeit t_{T} wurde in Tabelle 7 und 8 der Zeitpunkt angegeben, bei dem der Sand sich wieder von der Klebstoffraupe abschütteln lässt.

In Tabelle 9 sind die mechanischen Werte von Verklebungen angegeben. Es wurden hierbei einerseits die Zugfestigkeit und Bruchdehnung der ausgehärteten zweikomponentigen Zusammensetzungen ***Ref.16*** und ***36*** auf einer Zugmaschine Zwick/Roell Z005 nach ISO 527 mit 200mm/min gemessen. Andererseits wurden die Zugscherfestigkeiten von mittels ***Ref.16*** und ***36*** verklebten Substraten (jeweils zwei gleiche Substrate von Rocholl Deutschland) auf einer Zugmaschine Zwick/Roell Z005 nach ISO 4587/DIN EN 1465, mit 10 mm/min gemessen.

**Tabelle 9. Zweikomponentiger Klebstoff. *adh.=adhesiver Bruch **coh.=cohäsiver Bruch. ***SB=Substratbruch**

| | ***Ref.16*** | ***36*** |
|---|---|---|
| Zugfestigkeit [MPa] | 5.9 | 9.6 |
| Bruch Dehnung [%] | 132 | 91 |
| Zugfestigkeit Alu/Alu [MPa] | 6.6 (adh.*) | 10.1 (coh.**) |
| Zugfestigkeit ABS/ABS [MPa] | 3.7 (adh.*) | 5.4 (SB.***) |
| Zugfestigkeit Glas/Glas [MPa] | 4.8 (adh.*) | 7.4 (coh.**) |

Die Resultate aus Tabelle 7 und 8 zeigen, dass die erfindungsgemässen Zusammensetzungen eine starke Verkürzung der Trockenzeit aufweisen. Die Resultate aus Tabelle 9 zeigen, dass die erfindungsgemässen Zusammensetzungen abgesehen von einer erhöhten Zugfestigkeit insbesondere eine erhöhte Haftung aufweisen.

## Patentansprüche

1. Zwei- oder mehrkomponentige Zusammensetzung umfassend mindestens die Inhaltsstoffe a), b), c) und d)
a) mindestens ein (Meth)acrylat;
b) mindestens eine Verbindung der Formel (I) 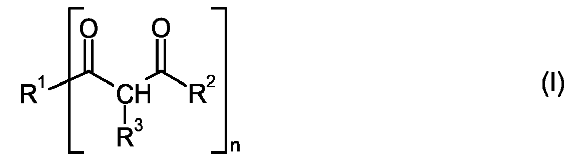 wobei n für einen Wert von 1 bis 20, insbesondere von 1, 2, 3, 4, 5 oder 6, steht;
R¹ für einen n-wertigen organischen Rest steht;
R² für eine, gegebenenfalls substituierte, Alkylgruppe, Cycloalkylgruppe, Arylgruppe, Aralkylgruppe steht oder zusammen mit R³ einen Ring schliesst, welcher gegebenenfalls Heteroatome im oder am Ring umfasst, oder für einen Rest OR⁴ steht,
wobei R⁴ für eine, gegebenenfalls substituierte, Alkylgruppe, Cycloalkylgruppe, Arylgruppe oder Aralkylgruppe steht, oder zusammen mit R³ einen Ring schliesst, welcher gegebenenfalls Heteroatome im oder am Ring umfasst,
und wobei R³ für eine, gegebenenfalls substituierte, Alkylgruppe, Cycloalkylgruppe, Arylgruppe, Aralkylgruppe steht oder zusammen mit R² einen Ring schliesst, welcher gegebenenfalls Heteroatome im oder am Ring umfasst;
c) mindestens ein Metallsalz oder ein Metallkomplexverbindung mindestens eines Metalls ausgewählt aus der Gruppe der Übergangsmetalle;
d) mindestens ein Peroxid oder mindestens ein Perester oder mindestens ein Hydroperoxid;
wobei die erste Komponente **K1** mindestens den Inhaltsstoff c) umfasst; die zweite Komponente **K2** mindestens den Inhaltsstoff d) umfasst; und
wobei die Inhaltsstoffe c) und d) nicht Teil derselben Komponente sind.

2. Zwei- oder mehrkomponentige Zusammensetzung gemäss Anspruch 1, **dadurch gekennzeichnet, dass** R¹ ein Rest R^{1'}(O)ₙ ist, wobei R^{1'}(O)ₙ ein Alkohol R^{1'}(OH)ₙ mit n Hydroxyl-Gruppen, nach der Entfernung aller Protonen aller Hydroxylgruppen, ist.

3. Zwei- oder mehrkomponentige Zusammensetzung gemäss Anspruch 2, **dadurch gekennzeichnet, dass** der Alkohol Trimethylolpropan, Pentaerythrit, Glycerin, ein Zucker oder ein Diol der Formel (II) ist 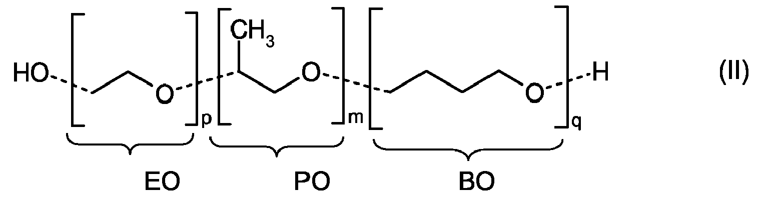 mit p = 0 - 65, m = 0 - 65, q = 0 - 65, wobei die Summe von m, p und q einen Wert von 1 bis 65 ergibt, und wobei die EO- und PO- und BO-Einheiten, falls vorhanden, blockweise oder zufällig verteilt sind.

4. Zwei- oder mehrkomponentige Zusammensetzung gemäss Anspruch 2, **dadurch gekennzeichnet, dass** der Alkohol ein OH-terminiertes Polyurethanprepolymer ist, welches erhältlich ist aus der Umsetzung mindestens eines Polyols mit mindestens einem Polyisocyanat in einem stöchiometrischen Überschuss der Hydroxyl-Gruppen gegenüber den Isocyanat-Gruppen.

5. Zwei- oder mehrkomponentige Zusammensetzung gemäss Anspruch 1 oder 2, **dadurch gekennzeichnet, dass** n = 1 und dass R¹ für eine, gegebenenfalls substituierte, Alkylgruppe, Cycloalkylgruppe, Arylgruppe, Aralkylgruppe oder für einen Rest OR⁵ steht,
wobei R⁵ für eine, gegebenenfalls substituierte, Alkylgruppe, Cycloalkylgruppe, Arylgruppe oder Aralkylgruppe oder eine Gruppe der Formel (III) steht: 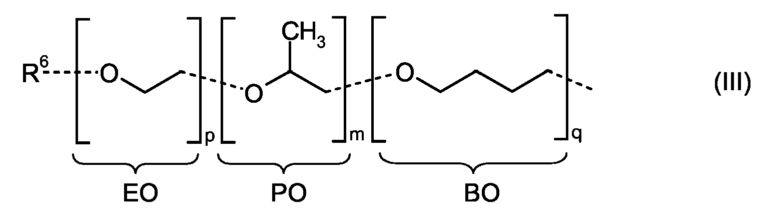 wobei R⁶ für eine C₁- bis C₄-Alkylgruppe steht und
mit p = 0 - 65, m = 0 - 65, q = 0 - 65, wobei die Summe von m, p und q einen Wert von 1 bis 65 ergibt, und wobei die EO- und PO-und BO- Einheiten, falls vorhanden, blockweise oder zufällig verteilt sind.

6. Zwei- oder mehrkomponentige Zusammensetzung gemäss einem der vorhergehenden Ansprüche, **dadurch gekennzeichnet, dass** die Verbindung der Formel (I) eine Verbindung der Formel (IV) oder (V) ist: 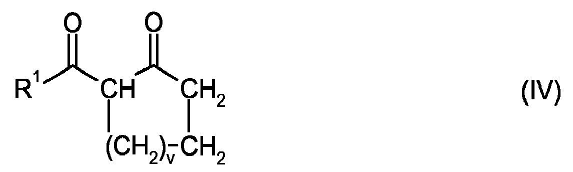 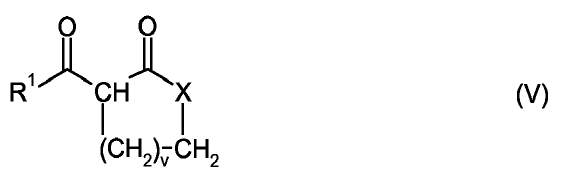 wobei v = 1, 2 oder 3 ist und X ein O, S oder ein NR⁷ ist, wobei R⁷ für H oder für eine, gegebenenfalls substituierte, Alkylgruppe, Cycloalkylgruppe, Arylgruppe, Aralkylgruppe steht.

7. Zwei- oder mehrkomponentige Zusammensetzung gemäss Anspruch 6, **dadurch gekennzeichnet, dass** v = 1 oder 2 ist.

8. Zwei- oder mehrkomponentige Zusammensetzung gemäss Anspruch 6 oder 7, **dadurch gekennzeichnet, dass** X=O.

9. Zwei- oder mehrkomponentige Zusammensetzung gemäss einem der Ansprüche 6 bis 8, **dadurch gekennzeichnet, dass** Formel (I) eine Verbindung der Formel (IV) und dass R¹ für einen Rest OR⁵ steht,
wobei R⁵ für eine für eine, gegebenenfalls substituierte, Alkylgruppe, Cycloalkylgruppe, Arylgruppe oder Aralkylgruppe oder eine Gruppe der Formel (III) steht: 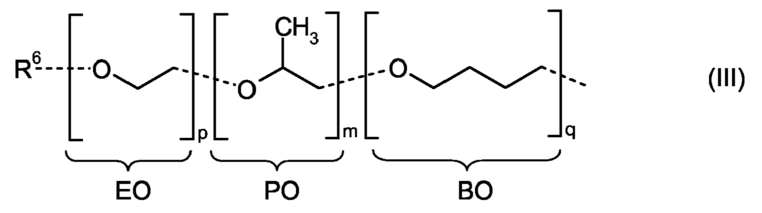 wobei R⁶ für eine C₁- bis C₄-Alkylgruppe steht und
mit p = 0 - 65, m = 0 - 65, q = 0 - 65, wobei die Summe von m, p und q einen Wert von 1 bis 65 ergibt, und wobei die EO- und PO- und BO- Einheiten, falls vorhanden, blockweise oder zufällig verteilt sind.

10. Zwei- oder mehrkomponentige Zusammensetzung gemäss einem der Ansprüche 6 bis 8, **dadurch gekennzeichnet, dass** Formel (I) eine Verbindung der Formel (V) und dass R¹ für eine, gegebenenfalls substituierte, Alkylgruppe, Cycloalkylgruppe, Arylgruppe oder Aralkylgruppe, bevorzugt eine C₁-C₆-Alkylgruppe, steht.

11. Zwei- oder mehrkomponentige Zusammensetzung gemäss einem der vorhergehenden Ansprüche, **dadurch gekennzeichnet, dass** die Verbindung der Formel (I) Acetylbutyrolacton oder Cyclopentanon-2-carbonsäure-ethylester oder Cyclopentanon-2-carbonsäure-methylester ist.

12. Zwei- oder mehrkomponentige Zusammensetzung gemäss einem der vorhergehenden Ansprüche, **dadurch gekennzeichnet, dass** das Metall des mindestens einen Metallsalzes oder der Metallkomplexverbindung ein Metall ist, welches ausgewählt ist aus der Gruppe umfassend Cobalt, Mangan, Vanadium, Eisen, Kupfer, Chrom und Zirkonium.

13. Zwei- oder mehrkomponentige Zusammensetzung gemäss einem der vorhergehenden Ansprüche, **dadurch gekennzeichnet, dass** das Metallsalz oder die Metallkomplexverbindung ein Cobalt-Komplex ist.

14. Zwei- oder mehrkomponentige Zusammensetzung gemäss einem der vorhergehenden Ansprüche, **dadurch gekennzeichnet, dass** die Zusammensetzung mindestens zwei Metallkomplexe umfasst von Metallen, welche ausgewählt sind aus der Gruppe umfassend Cobalt, Mangan, Vanadium, Eisen, Kupfer, Chrom und Zirkonium, wobei die mindestens zwei Metallkomplexe unterschiedliche Metalle aufweisen.

15. Zwei- oder mehrkomponentige Zusammensetzung gemäss Anspruch 14, **dadurch gekennzeichnet, dass** die mindestens zwei Metallkomplexe mindestens ein Cobalt-Komplex und ein Vanadium-Komplex oder mindestens ein Cobalt-Komplex und ein Mangan-Komplex sind.

16. Zwei- oder mehrkomponentige Zusammensetzung gemäss einem der vorhergehenden Ansprüche, **dadurch gekennzeichnet, dass** das mindestens eine Peroxid oder der mindestens eine Perester oder das mindestens eine Hydroperoxid ein Hydroperoxid ist und insbesondere Cumolhydroperoxid oder p-Isopropylcumolhydroperoxid ist.

17. Zwei- oder mehrkomponentige Zusammensetzung gemäss einem der vorhergehenden Ansprüche, **dadurch gekennzeichnet, dass** das (Meth)acrylat im Esterteil ein Heteroatom, insbesondere ein Sauerstoffatom, aufweist, welches durch mindestens 1 aber durch weniger als 5, insbesondere durch 2 oder 3, Kohlenstoffatome von dem in der Formel (VI) mit Stern bezeichneten markierten Sauerstoffatom entfernt ist

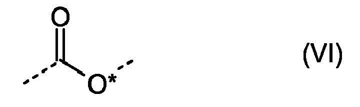

18. Zwei- oder mehrkomponentige Zusammensetzung gemäss einem der vorhergehenden Ansprüche, **dadurch gekennzeichnet, dass** die Zusammensetzung eine dreikomponentige Zusammensetzung ist mit einer dritten Komponente **K3,** welche mindestens den Inhaltsstoff a) umfasst; und wobei
der Inhaltsstoff b) Teil von der Komponente **K1** oder **K2** oder **K3,** bevorzugt **K1,** ist.

19. Zwei- oder mehrkomponentige Zusammensetzung gemäss einem der Ansprüche 1 bis 18, **dadurch gekennzeichnet, dass** die Zusammensetzung eine zweikomponentige Zusammensetzung ist und
wobei der Inhaltsstoff a) Teil der Komponente **K1** ist; und
der Inhaltsstoff b) Teil von der Komponente **K1** oder **K2 ,** bevorzugt **K1,** ist.

20. Zwei- oder mehrkomponentige Zusammensetzung, gemäss einem der vorhergehenden Ansprüche, **dadurch gekennzeichnet, dass** der Anteil der Verbindung der Formel (I) 0.1 bis 20 Gew.-%, insbesondere 0.1 bis 10 Gew.-%, bevorzugt 1 bis 5 Gew.-%, bezogen auf das Gewicht der zwei-oder mehrkomponentigen Zusammensetzung beträgt.

21. Zwei- oder mehrkomponentige Zusammensetzung, gemäss einem der vorhergehenden Ansprüche, **dadurch gekennzeichnet, dass** der Anteil des mindestens einen Metallsalzes oder der Metallkomplexverbindung, als Metall berechnet, 0.001 bis 0.5 Gew.-%, insbesondere 0.01 bis 0.4 Gew.-%, bevorzugt 0.01 bis 0.2 Gew.-%, bezogen auf das Gewicht der zwei- oder mehrkomponentigen Zusammensetzung beträgt.

22. Ausgehärtete Zusammensetzung erhalten durch eine Polymerisationshärtung einer zwei- oder mehrkomponentigen Zusammensetzung gemäss einem der Ansprüche 1 bis 21 an Luft.

23. Verwendung einer Mischung umfassend mindestens einer Verbindung der Formel (I), wie sie in einem der Ansprüche 1 bis 21 beschrieben ist, sowie mindestens eines Metallkomplexes mindestens eines Metalls ausgewählt aus der Gruppe der Übergangsmetalle, wie er in einem der Ansprüche 1 bis 20 beschrieben ist, zur Verringerung der Sauerstoffinhibierung in der Polymerisation von (Meth)acrylaten.

24. Verwendung einer zwei- oder mehrkomponentigen Zusammensetzung gemäss einem der Ansprüche 1 bis 21 als Klebstoff, Dichtstoff, Beschichtung, insbesondere als Beschichtung.

25. Beschichteter Artikel erhalten durch ein Verfahren umfassend
- Mischen der zwei oder mehr Komponenten einer Zusammensetzung gemäss einem der Ansprüche 1 bis 21
- Beschichten eines Substrates **S1** mit dieser Mischung
- Aushärten der gemischten Zusammensetzung an Luft

26. Verklebter Artikel erhalten durch ein Verfahren umfassend die Schritte
- Mischen der zwei oder mehr Komponenten einer Zusammensetzung gemäss einem der Ansprüche 1 bis 21
- Applizieren dieser Mischung auf eine Oberfläche eines Substrates **S1**
- Kontaktieren einer Oberfläche eines weiteren Substrates **S2** mit der auf dem Substrat **S1** applizierten Mischung, wobei die Substrate **S1** und **S2** aus gleichem oder unterschiedlichem Material sind
- Aushärten der gemischten Zusammensetzung

27. Abgedichteter Artikel erhalten durch ein Verfahren umfassend die Schritte
- Mischen der zwei oder mehr Komponenten einer Zusammensetzung gemäss einem der Ansprüche 1 bis 21
- Applizieren dieser Mischung in einen Spalt zwischen zwei Substrate **S1** und **S2,** wobei die Substrate **S1** und **S2** aus gleichem oder unterschiedlichem Material sind
- Aushärten der gemischten Zusammensetzung
